# EUROPÄISCHE PATENTANMELDUNG

(11) **EP 3 363 611 A1**
(43) Veröffentlichungstag der Anmeldung: **22.08.2018**
(21) Anmeldenummer: 17157043.5
(22) Anmeldetag: 21.02.2017
(51) Int. Cl.: B29C 33/30, B29C 33/38, B33Y 80/00, B29C 51/30, B29C 70/84

(54) **VERFAHREN ZUM HERSTELLEN EINER FORM UND FORM**

(71) Anmelder: Hochschule für angewandte Wissenschaften München, 80335 München (DE)
(72) Erfinder: HALLER, Dieter, 82041 Oberhaching (DE); HALLER, Felix, 82210 Gemering (DE)
(74) Vertreter: Hoefer & Partner Patentanwälte mbB

(57) **Zusammenfassung**

Die Erfindung betrifft ein Verfahren zum Herstellen einer Form (1) zum Umformen eines Ausgangskörpers, umfassend die Schritte des Bereitstellens einer Struktur (2), die aus mindestens zwei miteinander verbindbaren Elementen ausgebildet wird, des Berechnens eines Differenzteils (3) zwischen der herzustellenden Form (1) und der Struktur (2), und des Herstellens des Differenzteils mittels eines Druckprozesses. Ferner bezieht sich die Erfindung auf eine Form (1) zum Umformen eines Ausgangskörpers, die eine Struktur (2), die aus mindestens zwei miteinander verbindbaren Elementen ausgebildet ist, und ein Differenzteil (3) umfasst, welches einem Volumen zwischen der herzustellenden Form (1) und der Struktur (2) entspricht und als Druckteil ausgebildet ist, wobei das Differenzteil (3) auf die Struktur (2) aufgebracht ist und mit der Struktur (2) verbunden ist.

## Beschreibung

Die Erfindung betrifft ein Verfahren zum Herstellen einer Form zum Umformen eines Ausgangskörpers. Weiterhin betrifft die Erfindung eine Form, mittels der ein Ausgangskörper umgeformt werden kann.

Bei zahlreichen Herstellungsprozessen, wie etwa beim Thermoformen von Kunststoffen, beim Kunststoff-Spritzgießen, bei Schäumprozessen zur Verarbeitung von Polyurethanschäumen, beim Tiefziehen oder beim Blechumformen, werden Formen benötigt, die gemäß dem Stand der Technik in einem Fräsprozess gefertigt werden.

Fräsprozesse dienen gemäß dem Stand der Technik hauptsächlich zur Herstellung von Formwerkzeugen und sind mit einem hohen Materialeinsatz und Ressourcenverbrauch verbunden. Dies geht einher mit hohen Kosten und stellt eine beträchtliche ökologische Last dar. Angesichts des Klimawandels und der Notwendigkeit zur Energieeinsparung und Ressourcenschonung ist aus dem Stand der Technik seit langem ein Ziel bekannt, wiederverwendbare Werkzeuge einzusetzen.

Eine andere Möglichkeit der Formgebung besteht darin, eine Positivform und eine Negativform zu verwenden, um so beidseitig eine Verformung aufzuprägen. In ähnlicher Weise werden bei Urformverfahren wie beim Gießen zwei Formhälften verwendet.

Es ist ferner eine Vorrichtung bekannt, bei der ein gedrucktes Teil auf ein einstellbares Stempelsystem aufgebracht wird. Während das gedruckte Teil speziell für einen Anwendungsfall hergestellt wird, kann das einstellbare Stempelsystem für beliebige Anwendungen genutzt werden. Nachteilig ist dabei, dass das Herstellverfahren einer Form zum Herstellen von komplexeren dreidimensionalen Objekten aufwendig werden kann.

Es ist Aufgabe der Erfindung, ein Verfahren zum Herstellen einer Form, insbesondere einer Form zum Umformen eines Ausgangskörpers, vorzuschlagen, mittels der bei einfacher und kostengünstiger Anwendbarkeit eine schnelle und kostengünstige Herstellung eines Objektes ermöglicht wird.

Die Lösung dieser Aufgabe erfolgt durch die Merkmale des Anspruchs 1. Daher wird die Aufgabe gelöst durch ein Verfahren zum Herstellen einer Form, insbesondere einer Form zum Umformen eines Ausgangskörpers, welches die folgenden Schritte umfasst: Zunächst wird eine Struktur (ein Strukturteil) bereitgestellt, die aus mindestens zwei miteinander verbindbaren Elementen ausgebildet wird. Zwischen der herzustellenden Form und der Struktur wird ein Differenzteil berechnet. Dieses Differenzteil wird mittels eines Druckprozesses hergestellt. Auf diese beschriebene Weise entsteht eine Form, insbesondere eine dreidimensionale Form, die die Struktur aus den mindestens zwei miteinander verbindbaren Elementen und das Differenzteil aufweist. Durch das erfindungsgemäße Verfahren wird die Form schnell, einfach und kostengünstig hergestellt. Insbesondere durch die Tatsache, dass die Elemente, die die Struktur bilden, miteinander verbindbar sind, entsteht eine sehr stabile Struktur, auf die dann das hergestellte Differenzteil aufgebracht werden kann. Die Formulierung "ein Differenzteil wird zwischen der Struktur und der herzustellenden Form berechnet" bedeutet, dass ein herzustellendes Differenzteil zwischen der Struktur und der herzustellenden Form berechnet wird. Mit anderen Worten wird ein Differenzraum zwischen der Struktur und der herzustellenden Form berechnet, der dem herzustellenden Differenzteil entspricht. Es sei angemerkt, dass der Begriff "Form" die in der Fertigungstechnik üblich verwendete Bedeutung aufweist, wenn dieser sich auf das durch das Verfahren hergestellte Erzeugnis gemäß der Erfindung bezieht. An allen anderen Stellen wird dieser als Synonym zum Begriff "Gestalt" verwendet.

Die Unteransprüche haben bevorzugte Weiterbildungen der Erfindung zum Inhalt.

Besonders bevorzugt wird die Struktur mit dem Differenzteil verbunden. Dazu weist vorzugsweise die Struktur einen ersten Verbindungsbereich auf, wobei das Differenzteil mit einem zweiten Verbindungsbereich versehen ist. So werden die Struktur und das Differenzteil über den ersten Verbindungsbereich und den zweiten Verbindungsbereich miteinander verbunden. Der erste Verbindungsbereich und der zweite Verbindungsbereich sind bevorzugt hinsichtlich ihrer Form komplementär ausgebildet, so dass die Struktur und das Differenzteil miteinander formschlüssig verbunden werden. Somit wird eine noch stabilere Form erzielt.

Als miteinander verbindbare Elemente werden vorzugsweise Bausteine benutzt, die jeweils mindestens ein erstes Kupplungselement und mindestens ein zweites Kupplungselement aufweisen. Das erste Kupplungselement ist bevorzugt als Erhebung geformt, wobei das zweite Kupplungselement als Vertiefung oder Ausnehmung ausgebildet ist.

Insbesondere werden Legosteine oder Duplosteine bzw. legoartige oder duploartige Bausteine verwendet. Ein Legostein oder Duplostein ist ein quaderförmiger Stein mit mindestens einer Noppe und einem Rohr, über die der Legostein oder Duplostein mit einem weiteren Legostein oder Duplostein verbindbar ist. Die Noppe und das Rohr weisen eine komplementäre Form auf. Dabei entspricht die Noppe dem ersten Kupplungselement und das Rohr dem zweiten Kupplungselement.

Ein legoartiger oder duploartiger Baustein ist im Rahmen der Erfindung vom Prinzip her ähnlich wie ein Legostein oder Duplostein ausgebildet. Der Unterschied besteht im Rahmen der Erfindung grundsätzlich darin, dass ein legoartiger oder duploartiger Baustein nicht unbedingt quaderförmig oder in den Abmessungen der herkömmlichen Legosteine oder Duplosteine ausgestaltet ist.

Vorzugsweise umfasst der erste Verbindungsbereich der Struktur das erste Kupplungselement oder das zweite Kupplungselement des Elements. Insbesondere umfasst der erste Verbindungsbereich der Struktur eine Noppe eines Legosteins oder Duplosteins bzw. eines legoartigen oder duploartigen Bausteins.

Weiter bevorzugt wird das Differenzteil durch eine Boolesche Subtraktion der Struktur von der herzustellenden Form berechnet. Dies bedeutet, dass zum Berechnen des Differenzteils ein Raum, der der Struktur entspricht, von einem Raum, der der herzustellenden Form entspricht, mittels einer Booleschen Operation subtrahiert wird.

Das Differenzteil wird vorzugsweise als separater Körper gedruckt und anschließend auf die Struktur aufgebracht. Hierzu werden bevorzugt Techniken des 3D-Drucks oder des Rapid-Prototyping-Verfahrens angewendet. Sobald der separate Körper fertiggestellt ist, wird dieser auf die Struktur aufgesetzt, so dass die Form hergestellt wird.

Nach einer alternativen vorteilhaften Ausgestaltung der Erfindung wird das Differenzteil direkt auf die Struktur gedruckt.

Das Differenzteil wird vorzugsweise mit mindestens einem Differenzteilkanal zum Ansaugen eines mittels der herzustellenden Form zu verformenden Ausgangskörpers ausgebildet. Dazu kann an den Differenzteilkanal eine Ansaugvorrichtung, insbesondere eine Pumpenvorrichtung, angeschlossen werden, um im Differenzteilkanal befindliche Luft anzusaugen. Durch den erzeugten Unterdruck wird der zu verformende Ausgangskörper, welcher auf die Form aufgebracht wird, auf die Form angesaugt. Somit können gleichermaßen konvexe und konkave Flächen eines Objektes hergestellt werden. Insbesondere ist somit das Herstellen eines Objekts mit einer konkaven Fläche, wenn das Objekt in einer Richtung vom Differenzteil zur Struktur gesehen wird, erleichtert. Das Objekt entspricht hierbei dem verformten Ausgangskörper.

Ferner bevorzugt wird die Struktur mit mindestens einem ersten Strukturkanal zum Ansaugen des Differenzteils ausgebildet. Dazu kann an den Strukturkanal der Struktur eine Ansaugvorrichtung, insbesondere Pumpenvorrichtung, angeschlossen werden. Die Ansaugvorrichtung ist eingerichtet, im Strukturkanal existierende Luft zu entfernen, so dass das Differenzteil auf die Struktur angesaugt wird. Dadurch wird eine noch stabilere Form hergestellt.

Zum Ansaugen des zu verformenden Ausgangskörpers auf das Differenzteil und des Differenzteils auf die Struktur kann vorzugsweise dieselbe Ansaugvorrichtung benutzt werden.

Ferner bevorzugt ist die Struktur mit mindestens einem zweiten Strukturkanal versehen, der derart ausgebildet wird, dass der zweite Strukturkanal in (Fluid-)Verbindung mit dem mindestens einen Differenzteilkanal steht, wenn das Differenzteil auf die Struktur aufgebracht wird. An den zweiten Strukturkanal kann eine Ansaugvorrichtung, insbesondere eine Pumpenvorrichtung, angeschlossen werden, die eingerichtet ist, im zweiten Strukturkanal und im Differenzteilkanal befindliche Luft anzusaugen. Somit wird der zu verformende Ausgangskörper gegen das Differenzteil und dadurch auch das Differenzteil gegen die Struktur gedrückt. Dadurch lassen sich auch die Toleranzen beim Herstellen der Form verringern.

Die Struktur wird vorzugsweise auf eine Grundplatte aufgebracht, die mit mindestens einem ersten Plattenkanal derart ausgebildet wird, dass der erste Plattenkanal in (Fluid-)Verbindung mit dem ersten Strukturkanal und/oder dem zweiten Strukturkanal im aufgebrachten Zustand der Struktur auf der Grundplatte steht. An den ersten Plattenkanal kann eine Ansaugvorrichtung, insbesondere eine Pumpenvorrichtung angeschlossen werden. Durch das Kommunizieren des ersten Plattenkanals mit dem ersten Strukturkanal kann das Differenzteil gegen die Struktur und die Grundplatte gedrückt werden. Das Kommunizieren des ersten Plattenkanals mit dem zweiten Strukturkanal dient dazu, dass das zu verformende Material, das Differenzteil und dadurch auch die die Struktur gegen die Grundplatte angesaugt werden.

Nach einer bevorzugten Ausgestaltung der Erfindung weist die Grundplatte einen ersten Aufnahmebereich zum Aufnehmen der Struktur und/oder zumindest teilweise des Differenzteils, und einen zweiten Aufnahmebereich mit mindestens einem zweiten Plattenkanal auf, wobei der zweite Plattenkanal abgedeckt wird. Dies bedeutet, dass im Falle einer Grundplatte, die größer als die Struktur ausgebildet ist, und in ihrem freien Bereich (zweiter Aufnahmebereich), also im nicht von der Struktur und/oder dem Differenzteil bedeckten Bereich, mindestens einen zweiten Plattenkanal aufweist, der abgedeckt wird.

Zum Abdecken des zweiten Plattenkanals kann vorzugsweise ein Legostein oder Duplostein bzw. ein legoartiger Baustein oder duploartiger Baustein benutzt werden.

Die Struktur wird an einem dem Differenzteil zugewandten Bereich der Struktur mit einem Strukturmaterial versehen, welches einen im Wesentlichen gleichen Wärmeleitkoeffizienten wie das Differenzteil aufweist. Insbesondere wird dasselbe Material für das Differenzteil und das Strukturmaterial benutzt. Besonders bevorzugt ist die Struktur vollständig aus einem Material ausgebildet, welches insbesondere einen im Wesentlichen gleichen Wärmeleitkoeffizienten wie das Differenzteil aufweist. Dadurch lassen sich Spannungen und Verzug vermeiden. Somit wird ferner eine schnelle Abkühlung der Form und damit eine Verkürzung der Zykluszeit erreicht.

Ferner betrifft die Erfindung eine Form zum Umformen eines Ausgangskörpers, welche eine Struktur, die aus mindestens zwei miteinander verbindbaren Elementen ausgebildet ist, und ein Differenzteil umfasst, welches einem Volumen zwischen der herzustellenden Form und der Struktur entspricht und als Druckteil ausgebildet ist, wobei das Differenzteil auf die Struktur aufgebracht ist und mit der Struktur verbunden ist. Als Druckteil ist das Teil zu verstehen, welches mittels eines Druckprozesses hergestellt ist. Die mit Bezug auf das beschriebene Verfahren erläuterten Vorteile sind auch hier gegeben.

Zum Ansaugen eines mittels der herzustellenden Form zu verformenden Ausgangskörpers ist vorzugsweise das Differenzteil mit mindestens einem Differenzteilkanal ausgebildet.

Bevorzugt ist die Struktur mit mindestens einem ersten Strukturkanal zum Ansaugen des Differenzteils ausgebildet.

Die Struktur ist ferner bevorzugt mit mindestens einem zweiten Strukturkanal derart ausgebildet, dass der zweite Strukturkanal in (Fluid-)Verbindung mit dem Differenzteilkanal steht, wenn das Differenzteil auf die Struktur aufgebracht ist.

Die Struktur ist weiter bevorzugt auf eine Grundplatte aufgebracht, die mit mindestens einem ersten Plattenkanal derart ausgebildet ist, dass der erste Plattenkanal in (Fluid-)Verbindung mit dem ersten Strukturkanal und/oder dem zweiten Strukturkanal steht.

Vorzugsweise weist die Grundplatte einen ersten Aufnahmebereich zum Aufnehmen der Struktur und/oder zumindest teilweise des Differenzteils, und einen zweiten Aufnahmebereich mit mindestens einem zweiten Plattenkanal auf, wobei der zweite Plattenkanal abgedeckt ist.

An einem dem Differenzteil zugewandten Bereich der Struktur ist die Struktur mit einem Strukturmaterial gestaltet, welches einen im Wesentlichen gleichen Wärmeleitkoeffizienten wie das Differenzteil aufweist Bevorzugt werden die Struktur und das Differenzteil aus demselben Material hergestellt.

Weitere Einzelheiten, Vorteile und Merkmale der vorliegenden Erfindung ergeben sich aus nachfolgender Beschreibung von Ausführungsbeispielen anhand der Zeichnung, wobei gleiche bzw. funktional gleiche Teile jeweils mit dem gleichen Bezugszeichen bezeichnet sind. Es zeigt:
- Fig. 1: eine schematische Schnittansicht einer Form gemäß einem ersten Ausführungsbeispiel, die mittels eines Verfahrens gemäß einem ersten Ausführungsbeispiel der Erfindung hergestellt wird,
- Fig. 2: eine schematische Schnittansicht eines Bauteils der Form von Fig. 1,
- Fig. 3: eine schematische Schnittansicht eines weiteren Bauteils der Form von Fig. 1,
- Fig. 4: eine schematische perspektivische Ansicht eines noch weiteren Bauteils der Form von Fig. 1,
- Fig. 5: eine schematische Vorderansicht eines Teilbereichs einer Form, anhand der ein Aspekt der Erfindung erläutert wird,
- Fig. 6: eine schematische Schnittansicht einer Form gemäß einem zweiten Ausführungsbeispiel, und
- Fig. 7: eine schematische Schnittansicht einer Formanordnung gemäß einem dritten Ausführungsbeispiel.

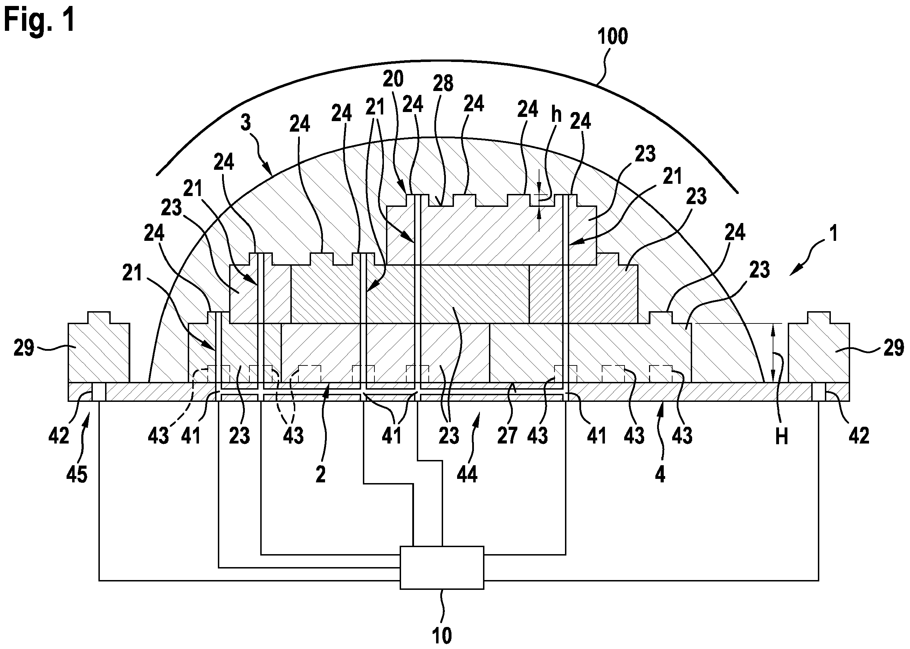

Nachfolgend wird unter Bezugnahme auf die Figuren 1 bis 5 eine Form 1 gemäß einem ersten Ausführungsbeispiel der vorliegenden Erfindung im Detail beschrieben. Mittels der Form 1 kann ein Ausgangskörper verformt werden. Der verformte Ausgangskörper (hergestelltes Objekt) ist in Figur 1 mit dem Bezugszeichen 100 bezeichnet. Die Form 1 wird durch ein Verfahren gemäß einem ersten Ausführungsbeispiel der vorliegenden Erfindung hergestellt. Das Verfahren zum Herstellen der Form 1 wird später näher erläutert.

Wie aus der Figur 1 ersichtlich ist, umfasst die Form 1 eine Struktur 2, die aus mindestens zwei miteinander verbindbaren Elementen 23 ausgebildet ist. Insbesondere umfasst die Struktur 2 eine Vielzahl von miteinander verbindbaren Elementen 23.

Ferner weist die Form 1 ein Differenzteil 3 auf, wobei das Differenzteil 3 einem Volumenkörper zwischen der Form 1 und der Struktur 2 entspricht.

Das Differenzteil 3 und die Struktur 2 sind vorzugsweise aus demselben Material ausgebildet. Somit lassen sich Probleme infolge unterschiedlicher Wärmeausdehnung vermeiden.

Das Differenzteil 3, welches ein Druckteil ist, ist auf die Struktur 2 aufgebracht und vorzugsweise mit der Struktur 2 verbunden.

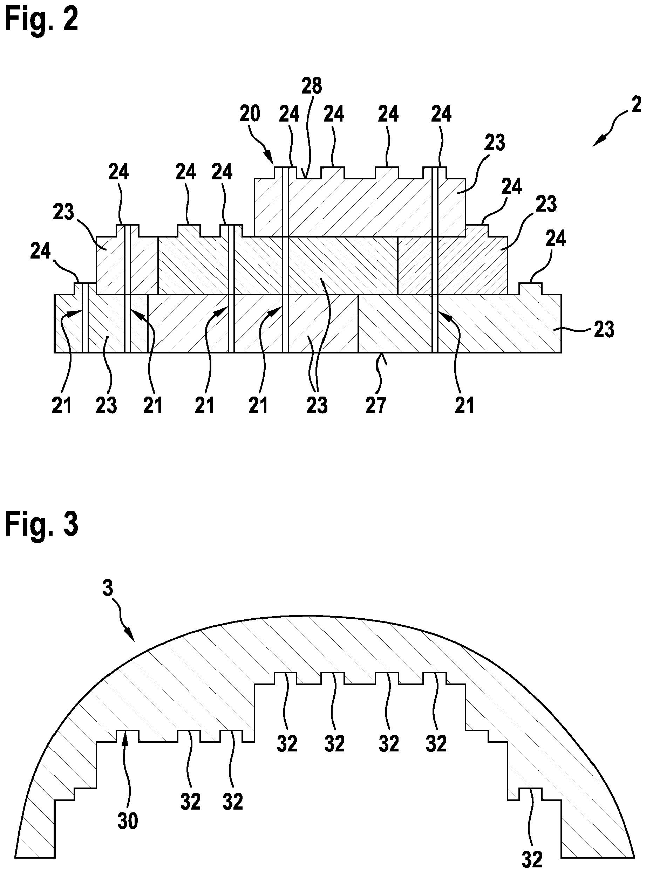

Dazu weist vorzugsweise die Struktur 2 einen ersten Verbindungsbereich 20 und das Differenzteil 3 einen zweiten Verbindungsbereich 30 auf (Figuren 2 und 3). Weiter bevorzugt sind die Struktur 2 und das Differenzteil 3, insbesondere der erste Verbindungsbereich 20 und der zweite Verbindungsbereich 30, im Hinblick auf ihre Form komplementär ausgebildet. Somit ist eine formschlüssige Verbindung zwischen der Struktur 2 und dem Differenzteil 3 vorgesehen.

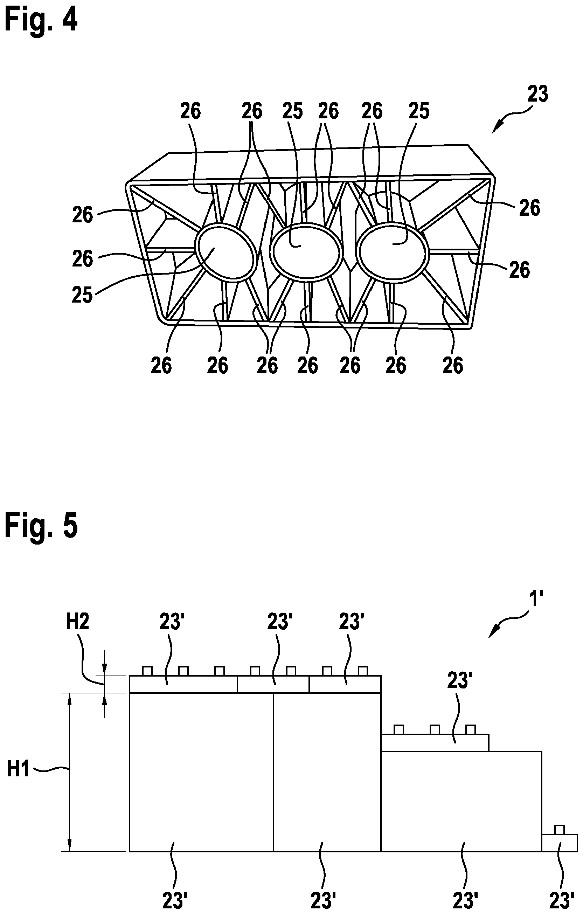

Die Elemente 23 weisen jeweils mindestens ein erstes Kupplungselement 24 und mindestens ein zweites Kupplungselement 25 auf. Die Figur 4 zeigt eine perspektivische Ansicht eines Elements 23 mit zweiten Kupplungselementen 25. Das erste Kupplungselement 24 ist bevorzugt als Erhebung geformt, wobei das zweite Kupplungselement 25 als Vertiefung oder Ausnehmung ausgebildet ist.

Somit umfasst in vorteilhafter Weise der erste Verbindungsbereich 20 der Struktur 2 die ersten Kupplungselemente 24 der Elemente 23. Der zweite Verbindungsbereich 30 des Differenzteils 3 umfasst hohlraumartige Gegenstücke 32 zu den ersten Kupplungselementen 24 (Figur 3).

Besonders bevorzugt ist jedes Element 23 als Legostein oder Duplostein ausgebildet. Ein Legostein oder Duplostein ist ein quaderförmiger Stein mit mindestens einer Noppe und einem Rohr, über die der Legostein oder Duplostein mit einem weiteren Legostein oder Duplostein verbindbar ist. Die Noppe und das Rohr weisen eine komplementäre Form auf.

So entspricht vorzugsweise die Noppe des Legosteins oder Duplosteins dem ersten Kupplungselement 24 und das Rohr dem zweiten Kupplungselement 25.

Aus der Figur 4 ist ferner ersichtlich, dass die Elemente 23 vorzugsweise mit mindestens einer Verstrebung 26 im Inneren versehen sind. Durch die Verstrebungen 26 wird eine hohe Stabilität der Elemente 23 gegen Druck gewährleistet. Die Verstrebungen 26 sind so gestaltet, dass die Verbindungen der Elemente 23 nicht behindert werden.

Weiterhin ist die Struktur 2 mit einer Vielzahl von ersten Strukturkanälen 21 versehen. Zur besseren Übersicht sind in Figur 1 nicht alle ersten Strukturkanäle 21 dargestellt. Die ersten Strukturkanäle 21 erstrecken sich vorzugsweise von einer dem Differenzteil 3 abgewandten Seite 27 der Struktur 2 bis zu einer dem Differenzteil 3 zugewandten Seite 28 der Struktur 2.

Die dem Differenzteil 3 zugewandte Seite 28 der Struktur 2 ist durch die oberen Seiten der dem Differenzteil 3 zugewandten Elemente 23 definiert und umfasst den ersten Verbindungsbereich 20 der Struktur 2.

Zum Bilden der ersten Strukturkanäle 21 sind jeweils die Elemente 23 mit mindestens einem Elementenkanal versehen. Somit ist jeder erste Strukturkanal 21 aus mindestens einem Elementenkanal ausgebildet. Wenn zwei oder mehrere Elemente 23 aufeinander gesetzt sind, stehen die Elementenkanäle der entsprechenden Elemente 23 in (Fluid-)Verbindung miteinander und bilden somit einen ersten Strukturkanal 21.

Insbesondere ist bei einem Element 23 ein Elementenkanal an der Stelle des ersten Kupplungselements 24 ausgebildet. Dazu kann das Element 23 an der Stelle des ersten Kupplungselements 24 durchgebohrt werden.

So ist vorzugsweise jeder erste Strukturkanal 21 an der Stelle von ersten Kupplungselementen 24 der entsprechenden Elemente 23 durchgängig, insbesondere als durchgängige Bohrung, ausgebildet.

Des Weiteren ist vorzugsweise die Struktur 2 auf eine Grundplatte 4 aufgebracht. Die Struktur 2 ist insbesondere auf einem ersten Aufnahmebereich 44 der Grundplatte 4 angeordnet. Das Differenzteil 3 ist bevorzugt teilweise auch auf dem ersten Aufnahmebereich 44 angeordnet.

Die Grundplatte 4 ist bevorzugt mit mindestens einem ersten Plattenkanal 41 versehen. Insbesondere ist in der Grundplatte 4 eine Vielzahl von ersten Plattenkanälen 41 vorgesehen. Jeder erste Plattenkanal 41 kommuniziert mit einem ersten Strukturkanal 21 der Struktur 2. Bevorzugt sind die ersten Plattenkanäle 41 durchgängig, insbesondere als durchgängige Bohrungen, in der Grundplatte 4 ausgebildet. Weiterhin sind die ersten Plattenkanäle 41 im ersten Aufnahmebereich 44 der Grundplatte 4 angeordnet. Vorzugsweise ist jeder erste Plattenkanal 41 mindestens mit einem anderen ersten Plattenkanal 41 verbunden. Dies bedeutet, dass jeder erste Plattenkanal 41 in Strömungsverbindung mit einem anderen ersten Plattenkanal 41 steht. Besonders bevorzugt kommuniziert jeder erste Plattenkanal 41 mit seinen benachbarten Plattenkanälen 41, das heißt, mit den zu diesem ersten Plattenkanal 41 nächstliegenden Plattenkanälen in der Grundplatte 4, insbesondere in einer ersten Richtung und in einer zweiten Richtung, die senkrecht zueinander stehen. Die Ansaugvorrichtung 10 ist mit jedem ersten Plattenkanal 41 verbunden.

Es ist alternativ auch möglich, dass nur ein erster Plattenkanal 41 durchgängig ausgebildet ist, an den die Ansaugvorrichtung 10 angeschlossen ist. In diesem Fall sind die restlichen ersten Plattenkanäle 41 derart miteinander und/oder mit dem einen durchgängigen ersten Plattenkanal 41 verbunden, dass auch jeder erste Plattenkanal 41 der restlichen ersten Plattenkanäle 41 mit der Ansaugvorrichtung 10 verbunden ist.

Die Grundplatte 4 umfasst des Weiteren einen zweiten Aufnahmebereich 45, der nicht von der Struktur 2 oder dem Differenzteil 3 abgedeckt ist. Mit anderen Worten sind die Struktur 2 und ein Teil des Differenzteils 3 vollständig auf dem ersten Aufnahmebereich 44 positioniert.

Im zweiten Aufnahmebereich 45 ist mindestens ein zweiter Plattenkanal 42, insbesondere eine Vielzahl von zweiten Plattenkanälen 42, ausgebildet. Der mindestens eine zweite Plattenkanal 42 bzw. die zweiten Plattenkanäle 42 sind vorteilhafterweise durchgängig ausgebildet. Wenn die zweiten Plattenkanäle 42 mit der Ansaugvorrichtung 10 verbunden sind, sind die zweiten Plattenkanäle 42 abgedeckt. Dazu können vorzugsweise Elemente 29 benutzt werden, die grundsätzlich ähnlich wie die Elemente 23 ausgebildet sind, jedoch keinen durchgängigen Elementenkanal aufweisen. Im Hinblick darauf werden im Rahmen der Erfindung die Elemente 29 als "geschlossen" bezeichnet, wohingegen die Elemente 23 als "offen" bezeichnet werden.

Ferner bevorzugt ist die Struktur 2 mit der Grundplatte 4 verbunden. Dazu ist die Grundplatte 4 vorzugsweise mit mindestens einem dritten Kupplungselement 43 versehen. Zur besseren Übersicht sind in Figur 1 nicht alle dritten Kupplungselemente 43 eingezeichnet.

In diesem Fall ist eine Vielzahl von dritten Kupplungselementen 43 bei der Grundplatte 4 vorgesehen. Die dritten Kupplungselemente 43 der Grundplatte 4 und die zweiten Kupplungselemente 25 der Elemente 23 weisen eine komplementäre Form auf, so dass eine formschlüssige Verbindung zwischen der Struktur 2 und der Grundplatte 4 entsteht. Die dritten Kupplungselemente 43 sind insbesondere als Noppen ausgestaltet.

An die ersten Plattenkanäle 41 ist eine Ansaugvorrichtung 10 angeschlossen. Die Ansaugvorrichtung 10, die insbesondere als Pumpenvorrichtung ausgebildet ist, dient dazu, in den ersten Strukturkanälen 21 und den ersten Plattenkanälen 41 befindliche Luft anzusaugen. Durch den entstehenden Unterdruck wird das Differenzteil 3 gegen die Struktur 2 und die Grundplatte 4 gedrückt. Somit wird die Stabilität der Form 1 erhöht.

Die Ansaugvorrichtung 10 ist auch an die zweiten Plattenkanäle 42 angeschlossen. Dadurch, dass die zweiten Plattenkanäle 42 durch die Elemente 29 abgedeckt sind, wird keine Falschluft angesaugt. Alternativ ist es möglich, dass die Ansaugvorrichtung 10 nicht an die zweiten Plattenkanäle 42 angeschlossen ist.

Weiterhin kann ein Metallelement an eine senkrechte Wand, insbesondere an jede senkrechte Wand, der Elemente 23 angeordnet sein. Insbesondere ist das Metallelement in die senkrechte Wand eingebettet, beispielsweise durch Umspritzen. Somit wird ermöglicht, dass die Elemente 23 dieselbe Wärmeleitfähigkeit in Vertikalrichtung entsprechend ihrem Metallanteil aufweisen.

Zum Herstellen der Form 1 wird zunächst die Struktur 2 bereitgestellt. Dazu wird, vorzugsweise mittels einer Software, ein Raum bzw. ein Volumenkörper, der der herzustellenden Form 1 entspricht, in Elemente 23 (virtuell) zerlegt. Insbesondere werden dabei die CAD-Daten des Volumenkörpers der herzustellenden Form 1 und eine Bibliothek der zur Verfügung stehenden (virtuellen) Elemente 23 benutzt.

Durch die Zerlegung des Volumenkörpers der herzustellenden Form 1 wird festgelegt, welche Elemente 23 benutzt und wie diese im Raum zueinander angeordnet werden müssen.

Um die Struktur 2 mit einer möglichst geringen Anzahl von Elementen 23 zu bilden, ist es vorteilhaft, wenn die Elemente 23 sehr unterschiedlich große Abmessungen aufweisen. Die Höhen H der Elemente 23 können sich vorzugsweise um einen Faktor in der Größenordnung von 10 bis 30 unterscheiden. Als Höhe H eines Elements 23 ist die Abmessung des Elements 23 zu verstehen, die parallel zu der Verbindungsrichtung ist, in der zwei Elemente 23 aufeinander gebracht werden und somit miteinander verbunden werden. Dazu zählt eine Höhe h des ersten Kupplungselements 24, bzw. eine Noppenhöhe nicht.

Ferner ist es vorteilhaft, wenn die Struktur 1 derart ausgebildet ist, dass die dem Differenzteil 3 zugewandten Elemente 23 eine Höhe aufweisen, deren Wert zwischen einem Dreifachen (einschließlich) und einem Vierfachen (einschließlich) von der Höhe h des ersten Kupplungselements 24 (Noppenhöhe) liegt. Die dem Differenzteil 3 zugewandten Elemente 23 sind besonders bevorzugt gleich hoch ausgestaltet.

Diese Aspekte werden anhand der schematischen Darstellung von Figur 5 näher erläutert. Die Figur 5 zeigt beispielsweise eine Struktur 1' aus einer Vielzahl von Elementen 23'. Bei der Struktur 1' beträgt ein Verhältnis der Höhe H1 des größten (im Hinblick auf die Höhe) Elements 23' zur Höhe H2 des kleinsten Elements 23 bevorzugt einen Wert zwischen 10 (einschließlich) und 30 (einschließlich). Bei der Struktur 1' sind vorzugsweise die einem Differenzteil zugewandten Elemente 23' gleich hoch ausgestaltet und weisen die Höhe H2 auf. Die Höhe H2 entspricht vorzugsweise einer dreifachen bis vierfachen Noppenhöhe des Elements 23'.

Nach der Auswahl der benötigten Elemente 23 werden die tatsächlichen Elemente 23 entsprechend deren festgelegter räumlicher Positionierung miteinander verbunden. Dies kann entweder manuell oder durch einen Roboter erfolgen, der eingerichtet ist, selbstständig den Zusammenbau der Struktur 2 vorzunehmen.

Die Struktur 2 wird dann auf die Grundplatte 4 aufgebracht und mit der Grundplatte 4 verbunden.

Danach werden vorzugsweise die ersten Strukturkanäle 21 in die gebildete Struktur 2 und die ersten Plattenkanäle 41 in die Grundplatte 4 gleichzeitig eingebracht, beispielsweise durch Bohren.

Alternativ können die jeweiligen Elementenkanäle in die gewählten Elemente 23 und in die Grundplatte 4 eingebracht werden bevor die Elemente 23 miteinander verbunden werden.

Um das Differenzteil 3 zu bilden, wird das Differenzteil 3 zwischen der Struktur 2 und einem Raum, der der herzustellenden Form 1 entspricht, berechnet. Mit anderen Worten wird ein Differenzraum zwischen einem Raum, der der Struktur 2 entspricht, und einem Raum, der der herzustellenden Form 1 entspricht, berechnet. Dies wird vorteilhafterweise dadurch erreicht, dass der Raum, der der Struktur 2 entspricht, vom Raum, der der herzustellenden Form 1 entspricht, mittels einer Booleschen Operation subtrahiert wird.

Anschließend wird das Differenzteil 3 mittels eines 3D-Druckprozesses ausgebildet. Nach einer bevorzugten Ausgestaltung der Erfindung kann das Differenzteil 3 als separates Teil hergestellt werden. Dazu ist es möglich, eine Vorrichtung mit verschiebbaren Stempeln zu benutzen, auf die das Differenzteil 3 gedruckt wird. Nach einer alternativen bevorzugten Ausgestaltung der Erfindung kann das Differenzteil 3 unmittelbar auf die Struktur 2 gedruckt werden.

Das Differenzteil 3 ist vorteilhafterweise aus einem temperaturfesten Thermoplast wie z.B. PPSU, Polycarbonat, oder Apec hergestellt.

Die Struktur 2 bzw. die Elemente 23 können je nach Anforderung an ihre Verwendung aus Metall, einem hochtemperaturfestem Kunststoff, CFK oder Naturfasermaterialien hergestellt werden.

Insbesondere wird die Struktur 2 mit dem Differenzteil 3 verbunden.

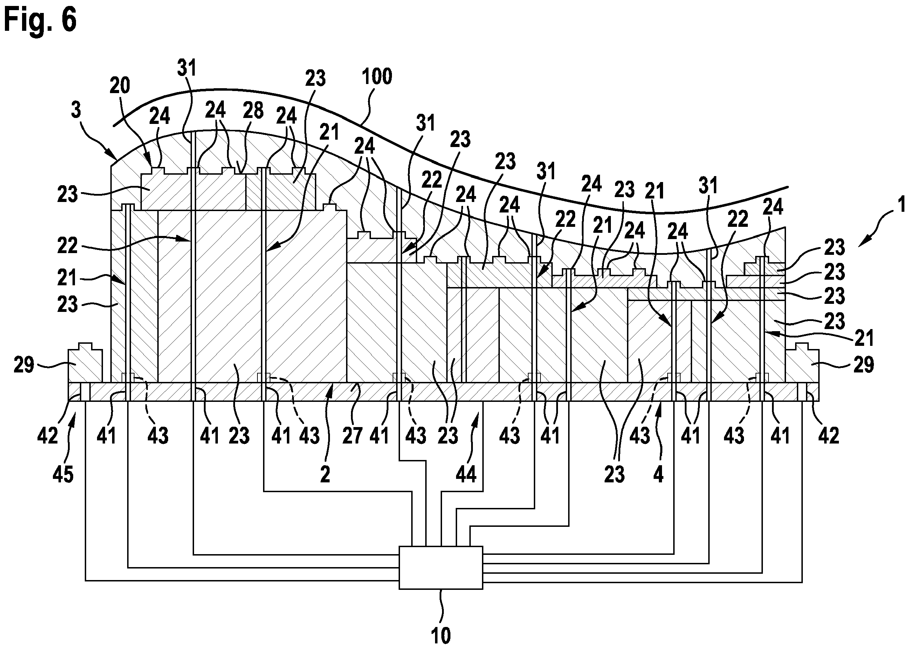

Die Figur 6 zeigt eine Form 1 gemäß einem zweiten Ausführungsbeispiel der Erfindung.

Die Form 1 gemäß dem zweiten Ausführungsbeispiel unterscheidet sich von derjenigen des ersten Ausführungsbeispiels dadurch, dass das Differenzteil 3 mindestens einen Differenzteilkanal 31 aufweist. Insbesondere ist eine Vielzahl von Differenzteilkanälen 31 im Differenzteil 3 vorgesehen.

Jeder Differenzteilkanal 31 kommuniziert in vorteilhafter Weise mit einem zweiten Strukturkanal 22 der Struktur 2. Somit kann ein auf der Form 1 liegender Ausgangskörper angesaugt werden. Dies ist besonders vorteilhaft, wenn der verformte Ausgangskörper 100 komplexe Geometrien, beispielsweise konkave und konvexe Flächen, aufweisen muss.

Die Differenzteilkanäle 31 können vorzugsweise gedruckt oder nachträglich in das gedruckte Differenzteil 3 gebohrt werden. Da im Differenzteil 2 die Positionen der Gegenstücke 32, in die die ersten Kopplungselemente 24 eingreifen, und an denen Unterdruck herrscht, bekannt sind, können die Differenzteilkanäle 31 mithilfe einer Software generiert werden.

Wenn die Differenzteilkanäle 31 nicht gedruckt, sondern nachträglich gebohrt werden, können an den Positionen, an denen die Differenzteilkanäle 31 in das gedruckte Differenzteil 3 eingebracht werden, Markierungen gedruckt werden. Dies erleichtert das Bohren zum Bilden der Differenzteilkanäle 31.

Ein weiterer Unterschied der Form 1 des zweiten Ausführungsbeispiels von der Form 1 des ersten Ausführungsbeispiels besteht darin, dass der erste Aufnahmebereich 44 nur die Struktur 2 aufnimmt. Hierbei ist das Differenzteil 3 vollständig auf der Struktur 2 angeordnet.

Ferner ist in diesem Ausführungsbeispiel kein erster Plattenkanal 41 mit einem anderen Plattenkanal 41 verbunden.

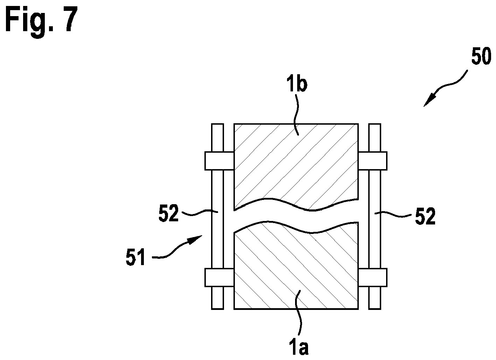

In der Figur 7 ist eine vereinfachte schematische Schnittansicht einer Formanordnung 50 dargestellt, die eine erste Form 1a, und eine zweite Form 1b gemäß der vorliegenden Erfindung aufweist. Die erste Form 1a und/oder die zweite Form 1b können beispielsweise wie die Form 1 gemäß dem ersten oder dem zweiten Ausführungsbeispiel ausgebildet sein.

Die erste Form 1a und die zweite Form 1b sind vorzugsweise komplementär zueinander ausgebildet. Das heißt, dass die Seite bzw. Fläche der ersten Form 1a und die Seite bzw. Fläche der zweiten Form 1b, die zum Umformen eines Ausgangskörpers benutzt werden, komplementär zueinander sind. Alternativ können die erste Form 1a und die zweite Form 1 b je nach Anwendung unterschiedlich gestaltet sein.

Vorzugsweise sind die erste Form 1a und die zweite Form 1b zueinander bewegbar, insbesondere verschiebbar, und/oder führbar angeordnet.

Dabei kann eine der Formen 1a, 1b fixiert und die andere Form bewegbar angeordnet sein. Alternativ können die erste Form 1a und die zweite Form 1b beide bewegbar angeordnet sein.

Zum Führen der ersten Form 1a und/oder der zweiten Form 1b ist vorzugsweise eine Führungsvorrichtung 51 vorgesehen. Die Führungsvorrichtung 51 umfasst bevorzugt zwei Führungen 52, die beidseitig in Bezug auf eine Achse, in deren Richtung die erste Form 1a und die zweite Form 1b zueinander verschiebbar sind, positioniert sind. Bevorzugt sind die erste Form 1a und die zweite Form 1b auf denselben Führungen 52 bewegbar.

Alternativ können jeweils für die erste Form 1a und die zweite Form 1b eine oder zwei Führungen vorgesehen sein. Wenn eine der Formen 1a, 1 b fixiert angeordnet ist, kann auf eine Führung für diese Form verzichtet werden.

Durch das erfindungsgemäße Verfahren können Formen für eine Vielzahl von Anwendungen schnell, flexibel und einfach hergestellt werden. So ist es beispielsweise möglich, Formen für Prototypen und Endprodukte in der Fahrzeugtechnik, in der Luftfahrt, im Apparatebau und im Maschinenschutz-Bereich usw. bereitzustellen. Mittels der Form kann auch eine große Anzahl von Materialien wie z.B. Plexiglas, Polycarbonat, faserverstärkte Materialien (CFK, GFK u.a.), Naturfaser-Materialien, oder Thermoplasten umgeformt werden.

Es sei angemerkt, dass im Rahmen der Erfindung das Differenzteil vorzugsweise nicht aus miteinander verbindbaren Elementen wie z.B. Legosteinen oder Duplosteinen bzw. legoartigen oder duploartigen Bausteinen ausgebildet ist. Das Differenzteil 3 ist mittels eines Druckprozesses ausgebildet, bei dem ein Füllmaterial den berechneten Raum bzw. das berechnete Volumen zwischen der Struktur 2 und der herzustellenden Form 1 füllt. Dabei ist vorteilhaft, wenn der berechnete Raum vollständig mit Füllmaterial gefüllt wird. Allerdings ist es auch möglich, dass der berechnete Raum zwischen der Struktur 2 und der herzustellenden Form 1 zum Bilden des Differenzteils 3 nur teilweise mit Füllmaterial gefüllt wird, solange eine Flächenkontur des Differenzteils 3 gebildet ist. Insbesondere kann so beispielsweise das Differenzteil 3 hohl ausgebildet sein, d.h., dass das Differenzteil 3 in einem inneren Bereich kein Füllmaterial aufweisen kann.

Neben der vorstehenden schriftlichen Beschreibung der Erfindung wird zu deren ergänzender Offenbarung hiermit explizit auf die zeichnerische Darstellung der Erfindung in den Fig. 1 bis 7 Bezug genommen.

### Bezugszeichenliste

- 1: Form
- 1': Form
- 1a: erste Form
- 1b: zweite Form
- 2: Struktur
- 3: Differenzteil
- 4: Grundplatte
- 10: Ansaugvorrichtung
- 20: erster Verbindungsbereich
- 21: erster Strukturkanal
- 22: zweiter Strukturkanal
- 23: Element
- 23': Element
- 24: erstes Kupplungselement
- 25: zweites Kupplungselement
- 26: Verstrebung
- 27: dem Differenzteil abgewandte Seite der Struktur
- 28: dem Differenzteil zugewandte Seite der Struktur
- 29: Element
- 30: zweiter Verbindungsbereich
- 31: Differenzteilkanal
- 32: Gegenstück
- 41: erster Plattenkanal
- 42: zweiter Plattenkanal
- 43: drittes Kupplungselement
- 44: erster Aufnahmebereich
- 45: zweiter Aufnahmebereich
- 50: Formanordnung
- 51: Führungsvorrichtung
- 100: verformter Ausgangskörper
- H: Höhe eines Elements
- h: Höhe des ersten Kupplungselements (Noppenhöhe)
- H1: Höhe des größten Elements
- H2: Höhe des kleinsten Elements

## Patentansprüche

1. Verfahren zum Herstellen einer Form (1) zum Umformen eines Ausgangskörpers, umfassend die Schritte:
• Bereitstellen einer Struktur (2), die aus mindestens zwei miteinander verbindbaren Elementen ausgebildet wird,
• Berechnen eines Differenzteils (3) zwischen der herzustellenden Form (1) und der Struktur (2), und
• Herstellen des Differenzteils (3) mittels eines Druckprozesses.

2. Verfahren nach Anspruch 1, wobei das Differenzteil (3) durch eine Boolesche Subtraktion der Struktur (2) von der herzustellenden Form (1) berechnet wird.

3. Verfahren nach einem der vorherigen Ansprüche, wobei das Differenzteil (3) als separater Körper ausgebildet wird, und anschließend auf die Struktur (2) aufgebracht wird.

4. Verfahren nach Anspruch 1 oder 2, wobei das Differenzteil (3) direkt auf die Struktur (2) gedruckt wird.

5. Verfahren nach einem der vorherigen Ansprüche, wobei das Differenzteil (3) mit mindestens einem Differenzteilkanal (31) zum Ansaugen eines mittels der herzustellenden Form (1) zu verformenden Ausgangskörpers ausgebildet wird.

6. Verfahren nach einem der vorherigen Ansprüche, wobei die Struktur (2) mit mindestens einem ersten Strukturkanal (21) zum Ansaugen des Differenzteils (3) ausgebildet wird.

7. Verfahren nach Anspruch 5 oder 6, wobei die Struktur (2) mit mindestens einem zweiten Strukturkanal (22) versehen ist, der derart ausgebildet wird, dass der zweite Strukturkanal (22) in Verbindung mit dem mindestens einen Differenzteilkanal (31) steht, wenn das Differenzteil (3) auf die Struktur (2) aufgebracht wird.

8. Verfahren nach Anspruch 6 oder 7, wobei die Struktur (2) auf eine Grundplatte aufgebracht wird, die mit mindestens einem ersten Plattenkanal (41) derart ausgebildet wird, dass der erste Plattenkanal (41) in Verbindung mit dem ersten Strukturkanal (21) und/oder dem zweiten Strukturkanal (22) steht, wenn die Struktur auf die Grundplatte aufgebracht wird.

9. Verfahren nach Anspruch 8, wobei die Grundplatte (4) einen ersten Aufnahmebereich (44) zum Aufnehmen der Struktur (2) und/oder zumindest teilweise des Differenzteils (3) und einen zweiten Aufnahmebereich (45) mit mindestens einem zweiten Plattenkanal (42) aufweist, wobei der zweite Plattenkanal (42) abgedeckt wird.

10. Verfahren nach einem der vorherigen Ansprüche, wobei die Struktur (2) an einem dem Differenzteil (3) zugewandten Bereich der Struktur (2) ein Strukturmaterial aufweist, welches einen im Wesentlichen gleichen Wärmeleitkoeffizienten wie das Differenzteil aufweist.

11. Form (1) zum Umformen eines Ausgangskörpers, umfassend:
• eine Struktur (2), die aus mindestens zwei miteinander verbindbaren Elementen ausgebildet ist, und
• ein Differenzteil (3), welches einem Volumen zwischen der herzustellenden Form (1) und der Struktur (2) entspricht und als Druckteil ausgebildet ist, wobei das Differenzteil (3) auf die Struktur (2) aufgebracht ist und mit der Struktur (2) verbunden ist.

12. Form nach Anspruch 11, wobei das Differenzteil (3) mit mindestens einem Differenzteilkanal (31) zum Ansaugen eines mittels der herzustellenden Form (1) zu verformenden Ausgangskörpers ausgebildet ist.

13. Form nach Anspruch 11 oder 12, wobei die Struktur (2) mit mindestens einem ersten Strukturkanal (21) zum Ansaugen des Differenzteils (3) ausgebildet ist.

14. Form nach einem Anspruch 12 oder 13, wobei die Struktur (2) mit mindestens einem zweiten Strukturkanal (22) derart ausgebildet ist, dass der zweite Strukturkanal (22) in Verbindung mit dem Differenzteilkanal (31) steht, wenn das Differenzteil (3) auf die Struktur (2) aufgebracht ist.

15. Form nach Anspruch 13 oder 14, wobei die Struktur (2) auf eine Grundplatte (4) aufgebracht ist, die mit mindestens einem ersten Plattenkanal (41) derart ausgebildet ist, dass der erste Plattenkanal (41) in Verbindung mit dem ersten Strukturkanal (21) und/oder dem zweiten Strukturkanal (22) steht.

16. Form nach Anspruch 15, wobei die Grundplatte (4) einen ersten Aufnahmebereich (44) zum Aufnehmen der Struktur (2) und/oder zumindest teilweise des Differenzteils (3) und einen zweiten Aufnahmebereich (45) mit mindestens einem zweiten Plattenkanal (42) aufweist, wobei der zweite Plattenkanal (42) abgedeckt ist.

17. Form nach einem der vorherigen Ansprüche, wobei die Struktur (2) an einem dem Differenzteil (3) zugewandten Bereich der Struktur (2) ein Strukturmaterial aufweist, welches einen im Wesentlichen gleichen Wärmeleitkoeffizienten wie das Differenzteil aufweist.
